# EUROPEAN PATENT SPECIFICATION

(11) **EP 1 135 952 B1**
(45) Date of publication and mention of the grant of the patent: **17.12.2008**
(21) Application number: 99960039.8
(22) Date of filing: 29.11.1999
(51) Int. Cl.: H04Q 7/38, H04Q 7/26

(54) **ARRANGEMENT IN A NETWORK, ESPECIALLY FOR LARGE DIGITAL ENHANCED CORDLESS TELECOMMUNICATIONS (DECT) SYSTEMS**
ANORDNUNG IN EINEM NETZ FÜR GROSSE DIGITALE ERWEITERTE SCHNURLOSE (DECT)TELEKOMMUNIKATIONSSYSTEME
ARCHITECTURE DE RESEAU POUR GRANDS SYSTEMES DECT

(30) Priority: 01.12.1998 NO 985608
(43) Date of publication of application: 26.09.2001
(73) Proprietor: TELEFONAKTIEBOLAGET LM ERICSSON (publ), 164 83 Stockholm (SE)
(72) Inventor: DYBEDOKKEN, Bjoern, Magne, N-1353 Baerums Verk (NO); TOENNESLAND, Sverre, N-0659 Oslo (NO)
(74) Representative: Holmberg, Nils Anders Patrik
(86) International application number: PCT/NO1999/000356
(87) International publication number: WO 2000/033507

(56) References cited:
- WO-A1-98/28937
- US-A- 5 077 790
- US-A- 5 572 574

## Description

### Field of the invention

The present invention relates to an arrangement in a network, especially for large Digital Enhanced Cordless Telecommunications (DECT) Systems, i.e. systems with several fixed parts connected to the same local network.

### Technical background

### The problem area

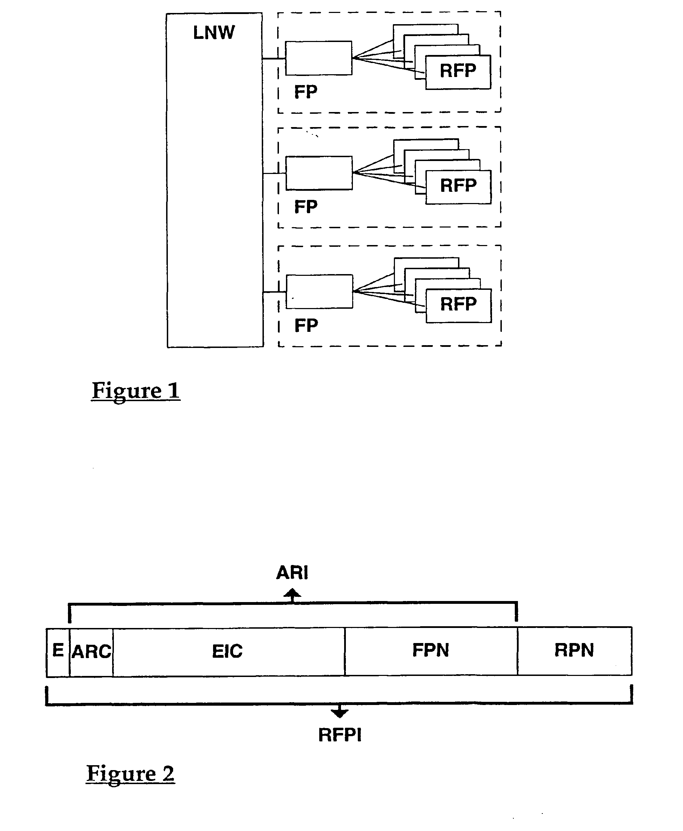

In Figure 1 there is illustrated a DECT system with several Fixed Parts (FP) connected to the same local network (LNW). An FP contains all the elements in a DECT network between the local network (LNW) and the DECT air interface.

Each FP has an ID that is unique within the network, the Primary Access Rights Identity, PARI.

Each Radio Fixed Part (RFP, base station) has a Radio Fixed Part Number, RPN that is unique within the fixed part that it is connected to. The base stations transmit a Radio Fixed Part Identity, RFPI, on the air interface. The RFPI is a combination of the PARI, the RPN and an extension bit E, and identifies the RFP and the FP that the RFP is connected to. The RFPI is used by the *Portable Parts,* PPs (handsets), to determine if they have access to the network.

In addition to the RFPI, the RFP may transmit a *Secondary Access Rights Identity,* SARI, which may also be used to give the PPs access to the network.

The layout and rules for use of ARIs and RFPI is defined in (1).

The structure of ARI and RFPI for private networks, class B, is shown in Figure 2. The elements are defined as follows:
- **E**: **Extension bit.** Indicates if an SARI is available or not. Not relevant for this document.
- **ARC**: **Access Rights Class**
Shows the type of access to a DECT network, such as residential, private or public.
- **EIC**: **Equipment Installer's code**
This a code that is supplied by ETSI identifies the installer of the DECT system, e.g. Ericcson.
- **FPN**: **Fixed Part Number**
A 12-bit number that identifies the fixed part. The number is unique to each FP within a network.
- **RPN**: **Radio Fixed Part Number**
An 8-bit number that identifies the radio fixed part.
The number is unique to each RFP within an FP.

The problem that this Invention Disclosure discusses is that of handling the different parameters such as PARI, RPN and HLI, in a network with many FP's. This applies both to the network owner, who must keep track of a number of parameters in his own network, and to the Equipment Installer (e.g. Ericsson) who must keep a data base of parameters for all the fixed parts sold.

If an FP or an RFP is to be removed, or if an FP or an RFP is added to the network, the FP or RFP must be assigned a PARI or an RPN. There are also other parameters that must be adapted to handle the new or removed FP or RFP, such as HLI. The Equipment Installer must find a free Identity (ARI) for the customer (network owner), and the customer must then assign the value to the network.

This manual administration of parameters requires extensive bookkeeping and is therefore time consuming and costly.

### Known solution

The use of DECT identities is described in detail in ETSI standards (1). ETSI does not, however, say anything about how the dealer of the system shall select and maintain the parameters.

### Problems with known solutions

Administration of identities for DECT systems is time consuming and costly both for the manufacturer and the operator of the equipment. Anything that can reduce the complexity of operation is therefore desirable.

The problems with handling DECT identities can be separated in three areas:
- **1**: **Manufacturer:** Assigning ARI values of the DECT equipment that is sold, and maintaining a database of these with reference to whom the equipment is sold. This is especially complex if the equipment is sold via retailers.
- **2**: **Network owner:** More work to install new fixed parts, because the PAHIs must be known and entered into the system manually. One cannot simply connect the hardware and start using it.
- **3**: **Security (Network owner):** It is desirable to have as many of the (most significant) bits in the ARI for the different FPs in a network equal, to reduce the risk of illegal access. This decides the length of the HLI, and to maintain as high a security level as possible, the value of the HLI should be small. If FPs, with a different EIC than the existing FPs in the network, are added, the HLI will be large, and illegal access to the system will be easier.

### Further prior art

From US 5,077,790 (D'Amico et al.) there is known a method for registration of a portable unit, that may be used in a communication system, comprising a network controller having a database for storing portable identification numbers. However, this prior art is silent about how to extend a telecommunication system having several fixed parts, in a safe and expedient manner.

US 5,572,574 relates to a method of on-air registration of a cordless telephone handset with a base station. Consequently, also this publication is silent about how to install new fixed parts in a network.

WO 98/28937 relates to an arrangement for location area management in a DECT system, in which a central unity connected to the fixed parts of a local area (LA) manages the identities within the LA. However, this solution may require manual entry of data identities for several times after initialisation, e.g. when the handsets are to roam between systems.

### Objects of the invention

An object of the present invention is to provide an arrangement whereby the problems related to known solutions are eliminated.

Another object of the present invention is to provide an arrangement whereby the dealer of the system can select and maintain the related parameters in a far more expedient manner.

Still another object of the present invention is to provide an arrangement whereby a network owner can install new fixed parts in a more time-saving and appropriate manner.

Yet another object of the present invention is to provide an arrangement whereby the network owner can maintain a high and secure level in order to reduce the risk of illegal access.

### Summary of the invention

These objects are achieved in an arrangement as stated in the preamble, which according to the present invention is characterised by the features as stated in the characterising clause of the enclosed patent claim 1.

In other words, according to the present invention there is given a solution of automatically generating the needed identities.

Further features and advantages of the present invention will appear from the following description taken in conjunction with the enclosed drawings, as well as from the further enclosed patent claims.

### Brief disclosure of the drawings

Figure 1 is a schematical diagram illustrating a DECT system with several fixed parts, in which system the present invention can find its application.

Figure 2 is a schematical diagram illustrating the layout of ARI and RFPI class B, private access.

### Detailed description of embodiments

Reference is made to Figure 1, whereon is illustrated a Digital Enhanced Cordless Telecommunications System, DECT. This system comprises several fixed parts FP connected to the same local network LNW. An FP contains all the elements in a DECT network between the local network LNW and the DECT air interface.

Each FP has an ID that is unique within the network, the Primary Access Rights Identity, PARI.

Consequently, each FP connected to a LNW must have its own, unique PARI within the network.

The local network will manage the PARI identities such that each FP has its own unique PARI. The FP will manage the identities of the base stations, such that each base station has an RPN that is unique within the fixed part. The local network will automatically select a new ARI when a new FP is connected. The FP will select a new base station identity when a new base station is connected.

When the first FP is connected to the network, the network must be given an SARI. The value of the SARI is given to the network operator by an Equipment installer (ref. EIC), and is entered into the network manually. The value of the SARI is unique to the network, and is distributed to all the FPs in the network, and is transmitted on all RFPs.

The PARI for each FP is calculated using the EIC-part of the SARI, see Figure 2. The HLI, which is common to the LNW, is recalculated and distributed to all FPs in the LNW when a new FP is added or removed.

The RPN for each RFP is handled by the individual FPs, and is automatically given to the RFPs when they are connected.

### Advantages

The automatic generation of parameters will reduce service and maintenance cost both for the manufacturer/distributor and the operator of cordless telecommunication systems. This creates a concept of "plug-and-play".

Assigning similar PARI values to all FPs in a system ensures that the value of the HLI will be small. This reduces the risk that other users will attempt (illegal) access to the network.

### Broadening

May be applicable to other cordless and cellular systems.

### GLOSSARY AND ACRONYMS

### Glossary

- **Fixed Part**: A physical grouping that contains all the elements in the DECT network between the local network and the DECT air interface.
- **Equipment Installer**: The organisation that is responsibly for installing the DECT equipment, usually the same as the manufacturer, e.g. Ericsson.
- **Local Network**: A telecommunication network capable of offering local telecommunication services. In this document, the term "network" is used in the same meaning as "Local Network".
- **Portable Part**: A physical grouping that contains all the elements between the user and the DECT air interface. Usually the cordless telephone handset.
- **Radio fixed part**: A physical sub-group of an FP that contains all the radio endpoints that are connected to a single system of antennas (=radio base station)

### Acronyms

- **ARI**: Access Rights Identity
- **DECT**: Digital Enhanced Cordless Telecommunications
- **EIC**: Equipment Installer's Code
- **FP**: Fixed Part
- **HLI**: Handover Length Indicator
- **LNW**: Local Network
- **PARI**: Primary Access Rights Identity
- **PARK**: Portable Access Rights Key
- **PP**: Portable Part
- **RFP**: Radio Fixed Part
- **RPN**: Radio fixed Part Number
- **SARI**: Secondary Access Rights Identity

### Reference documents

### 1. ETS300175-6 Second Edition

Radio Equipment and systems (RES);
Digital Enhanced Cordless Telecommunications (DECT); Common Interface (CI);
Part 6: Identities and addressing

## Claims

1. Arrangement in large Digital Enhanced Cordless Telecommunication-DECT-systems or similar systems, including several Fixed Parts (FP) connected to the same Local Network (LNW), each of said FP associated with one or more Radio Fixed Parts (RFP),
**characterized in** means for assigning a unique Secondary Access Rights Identity-SARI-to the LNW when the first FP is connected, means within the LNW for automatically assigning a unique Primary Access Rights Identicy-PARI-to each Fixed Part (FP) by deriving said PARI f=om a combination of an Equipment Installer's Code (EIC) included in said SARI and one or more generated bits, means within each Fixed Part (FP) for managing the identities of associated Radio Fixed Parts/base stations (RFP) each to have a Radio Fixed Part Number (RPN) that is unique with the Fixed Part (FP).

2. Arrangement as claimed in claim 1,
**characterized in** means within said LNW for selecting new Access Rights Identity (ARI) when a new fixed part (FP) is connected.

3. Arrangement as claimed in claim 1 or 2,
**characterized in** means within the FP for selecting a new base station/Radio Fixed Part Identity when a new base station/Radio Fixed Part is connected.

4. Arrangement as claimed in any of the preceding claims,
**characterized in that** said SARI is provided to the network operator by an Equipment Installer, and that said Equipment Installer or network operator manually enters said SARI into the network.

5. Arrangement as claimed in any of the preceding claims,
**characterized in** means for distributing said SARI to all the FPs in the network and for transmitting to all RFPs.

6. Arrangement as claimed in any of the preceding claims,
**characterized in** means for recalculating and distributing the Handover Length Indicator-HLI-to all FPs in the LNW when a new FP is added or removed.

7. Arrangement as claimed in any of the preceding claims,
**characterized in that** the RPN for each RFP is handled by the individual FPs, and is automatically given to the RFP₃ when they are connected.

8. Arrangement as claimed in any of the preceding claims,
**characterized in that** the arrangement is implemented as a "plug-and-play" concept.

## Patentansprüche

1. Anordnung in großen DECT-Systemen (Digital Enhanced Cordless Telecommunication Systems) oder ähnlichen Systemen einschließlich von mehreren Festteilen (Fixed Parts - FP), die mit dem gleichen Lokalnetzwerk (Local Network - LNW) verbunden sind, von denen jedes FP mit einem oder mehreren Funkfestteilen (RFP) verknüpft ist,
**gekennzeichnet durch**
eine Vorrichtung zum Zuordnen einer eindeutigen Zweitzugangsrechtidentität (Secondary Access Rights Identity - SARI) zu dem LNW, wenn das erste FP verbunden wird,
eine Vorrichtung innerhalb des LNW zum automatischen Zuordnen einer eindeutigen Erstzugangsrechtidentität (Primary Access Rights Identity - PARI) zu jedem Festteil (FP) **durch** Ableiten der PARI von einer Kombination eines Codes eines Ausrüstungseinrichter (Equipment Installer's Code - EIC), der in dem SARI eingeschlossen ist und einem oder mehreren erzeugten Bits,
einer Vorrichtung innerhalb jedes Festteils (FP) zum Verwalten der Identitäten der verknüpften Funkfestteile/Basisstationen (RFP), die alle eine Funkfestteilnummer (Radio Fixed Part Number - RPN) aufweisen sollen, die eindeutig mit dem Festteil (FP) ist.

2. Anordnung nach Anspruch 1, **gekennzeichnet durch** eine Vorrichtung innerhalb des LNW zum Auswählen einer neuen Zugangsrechtidentität (Access Right Identity - ARI), wenn ein neues Festteil verbunden wird.

3. Anordnung nach Anspruch 1 oder 2, **gekennzeichnet durch** eine Vorrichtung innerhalb des FP zum Auswählen einer neuen Basisstation/Funkfestteilidentität, wenn eine neue Basisstation / ein Funkfestteil verbunden wird.

4. Anordnung nach einem der vorangehenden Ansprüche, **dadurch gekennzeichnet, dass** die SARI an den Netzwerkbetreiber durch einen Ausrüstungseinrichter bereitgestellt wird und das der Ausrüstungseinrichter oder Netzwerkbetreiber die SARI manuell in das Netzwerk eingibt.

5. Anordnung nach einem der vorangehenden Ansprüche, **gekennzeichnet durch** eine Vorrichtung zum Verteilen der SARI an alle FPs in dem Netzwerk und zum Übertragen an alle RFPs.

6. Anordnung nach einem der vorangehenden Ansprüche, **gekennzeichnet durch** eine Vorrichtung zum Neuberechnen und Verteilen des Übergabelängenanzeigers (Handover Length Indicator - HLI) an alle FPs in dem LNW, wenn ein neues FP hinzugefügt oder entfernt wird.

7. Anordnung nach einem der vorangehenden Ansprüche, **gekennzeichnet dadurch, dass** die RPN für jedes RFP durch die einzelnen FPs übergeben wird, und automatisch an die RFPs gegeben wird, wenn diese verbunden werden.

8. Anordnung nach einem der vorangehenden Ansprüche, **dadurch gekennzeichnet, dass** die Anordnung als ein "Plug-and-Play"-Konzept implementiert ist.

## Revendications

1. Agencement dans de grands systèmes de télécommunications sans fil améliorées numériques (DECT pour Digital Enhanced Cordless Telecommunication) ou des systèmes similaires, comprenant plusieurs parties fixes (FP pour Fixed Part) connectées au même réseau local (LNW pour Local Network), chacune desdites parties fixes étant associée à une ou plusieurs parties fixes radio (RFP pour Radio Fixed Part),
**caractérisé par** des moyens pour attribuer une identité de droits d'accès secondaire (SARI pour Secondary Access Rights Identity) unique au réseau local lorsque la première partie fixe est connectée, des moyens à l'intérieur du réseau local pour attribuer automatiquement une identité de droits d'accès primaire (PARI pour Primary Access Rights Identity) unique à chaque partie fixe (FP) par dérivation de ladite identité de droits d'accès primaire à partir d'une combinaison d'un code d'installateur d'équipement (EIC pour Equipment Installer's Code) inclus dans ladite identité de droits d'accès secondaire et d'un ou de plusieurs bits générés, des moyens à l'intérieur de chaque partie fixe (FP) pour gérer les identités de parties fixes radio/stations de base (RFP) associées de façon à ce qu'elles aient chacune un numéro de partie fixe radio (RPN pour Radio fixed Part Number) qui est spécifique à la partie fixe (FP).

2. Agencement selon la revendication 1,
**caractérisé par** des moyens à l'intérieur dudit réseau local pour sélectionner une nouvelle identité de droits d'accès (ARI pour Access Rights Identity) lorsqu'une nouvelle partie fixe (FP) est connectée.

3. Agencement selon la revendication 1 ou 2,
**caractérisé par** des moyens à l'intérieur de la partie fixe pour sélectionner une nouvelle identité de station de base/partie fixe radio lorsqu'une nouvelle station de base/partie fixe radio est connectée.

4. Agencement selon l'une quelconque des revendications précédentes,
**caractérisé en ce que** ladite identité de droits d'accès secondaire est fournie à l'opérateur de réseau par un installateur d'équipement, et **en ce que** ledit installateur d'équipement ou opérateur de réseau entre manuellement ladite identité de droits d'accès secondaire dans le réseau.

5. Agencement selon l'une quelconque des revendications précédentes,
**caractérisé par** des moyens pour distribuer ladite identité de droits d'accès secondaire à toutes les parties fixes dans le réseau et pour la transmettre à toutes les parties fixes radio.

6. Agencement selon l'une quelconque des revendications précédentes,
**caractérisé par** des moyens pour recalculer et distribuer l'indicateur de longueur de temps de maintien (HLI pour Handover Lenght Indicator) à toutes les parties fixes dans le réseau local lorsqu'une nouvelle partie fixe est ajoutée ou retirée.

7. Agencement selon l'une quelconque des revendications précédentes,
**caractérisé en ce que** le RPN pour chaque partie fixe radio est traité par les parties fixes individuelles, et est automatiquement donné aux parties fixes radio lorsqu'elles sont connectées.

8. Agencement selon l'une quelconque des revendications précédentes,
**caractérisé en ce que** l'agencement est réalisé selon le concept "Plug-and-Play" (connexion-exécution).
